Europäisches Patentamt

European Patent Office

Office européen des brevets

(19)

(11) Veröffentlichungsnummer : **0 097 897**
**B1**

(12) **EUROPÄISCHE PATENTSCHRIFT**

(45) Veröffentlichungstag der Patentschrift :
22.10.86

(21) Anmeldenummer : 83105987.8

(22) Anmeldetag : 18.06.83

(51) Int. Cl.⁴ : **C 08 G   8/36, C 08 G 81/00,**
**C 10 G 33/04, B 01 D 17/04**

(54) **Modifizierte veretherte Phenol-Aldehyd-Kondensationsprodukte und deren Verwendung zum Spalten von Erdölemulsionen.**

(30) Priorität : 25.06.82 DE 3223691

(43) Veröffentlichungstag der Anmeldung :
11.01.84 Patentblatt 84/02

(45) Bekanntmachung des Hinweises auf die Patenterteilung : 22.10.86 Patentblatt 86/43

(84) Benannte Vertragsstaaten :
**AT BE CH DE FR GB IT LI NL**

(56) Entgegenhaltungen :
**DE-A- 2 445 873**
**US-A- 2 792 352**
**US-A- 4 054 554**
**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

(72) Erfinder : **Billenstein, Siegfried, Dr.**
**Samerbergweg 8**
**D-8261 Burgkirchen/Alz (DE)**
Erfinder : **Gohlke, Fritz Joachim, Dr.**
**Hochstaufenstrasse 9**
**D-8261 Burgkirchen/Alz (DE)**
Erfinder : **Hille, Martin, Dr.**
**In den Eichen 46**
**D-6237 Liederbach (DE)**
Erfinder : **Böhm, Roland**
**Fischbacher Strasse 29**
**D-6233 Kelkheim (Taunus) (DE)**

**Beschreibung**

Die Erfindung betrifft modifizierte, veretherte Phenol-Aldehyd-Kondensationsprodukte. Sie betrifft ferner ein Verfahren zum Trennen von Erdölemulsionen, insbesondere des Wasser-in-Öl-Typs, unter Verwendung dieser Kondensationsprodukte.

In der deutschen Patentschrift 24 45 873 und der entsprechenden Us-Patentschrift 4 117 031 werden veretherte Phenol-Aldehyd-Kondensationsprodukte zum Spalten von Rohölemulsionen (Erdölemulsionen) beschrieben. Diese Kondensationsprodukte werden dadurch hergestellt, daß man a) ein Anlagerungsprodukt, das durch Umsetzung von aliphatischen Aldehyden mit Phenol im molaren Verhältnis von 1 : 1 bis 3 : 1 bei Temperaturen von 50 bis 80 °C in Gegenwart eines alkalischen Katalysators erhalten worden ist, mit b) einem Blockpolymerisat, das durch Umsetzung von Polypropylenglykolen mit Molekulargewichten von 1 500 bis 2 500 mit 30 bis 50 Gew.-% Ethylenoxid in Gegenwart alkalischer Katalysatoren hergestellt worden ist, im Verhältnis von 0,5 bis 4 mol von a) mit 1 mol b) nach vorheriger Neutralisation, gegebenenfalls in Gegenwart indifferenter Lösungsmittel, bei 80 bis 150 °C kondensiert und das sich bildende Reaktionswasser entfernt.

Erdölspalter sollten insbesondere eine spontane Anfangsspaltung und kurze Gesamtseparationszeit aufweisen und zu einer möglichst vollständigen Wasserabscheidung und Salzaustragung führen. Dies alles sollte unabhängig von der Art (Herkunft) des Rohöls, bereits bei einer relativ niedrigen Erdöl-Aufbereitungstemperatur und mit einer relativ geringen Einsatzmenge an Spalter erreicht werden. Die aus der deutschen Patentschrift 24 45 873 und der US-Patentschrift 4 117 031 bekannten veretherten Phenol-Aldehyd-Kondensationsprodukte stellen zwar verhältnismäßig gute Erdölspalter dar, sie lassen jedoch bezüglich der Erfüllung der genannten Forderungen noch zu wünschen übrig.

Es wurde nun überraschenderweise gefunden, daß die Wirksamkeit von veretherten Phenol-Aldehyd-Kondensationsprodukten beim Spalten von Erdölemulsionen wesentlich erhöht werden kann, wenn man sie mit Ethylenoxid und Propylenoxid oder mit Propylenoxid allein umsetzt, wenn man also an diese Produkte Propylenoxid oder Ethylenoxid und Propylenoxid anlagert.

Die erfindungsgemäßen modifizierten, veretherten Phenol-Aldehyd-Kondensationsprodukte sind demnach dadurch gekennzeichnet, daß sie hergestellt worden sind, indem man

a) ein Anlagerungsprodukt, das durch Umsetzung von aliphatischen Aldehyden mit Phenol im molaren Verhältnis von 1 : 1 bis 3 : 1 bei Temperaturen von 50 bis 80 °C in Gegenwart eines alkalischen Katalysators erhalten worden ist mit

b) einem Blockpolymerisat, das durch Umsetzung von Polypropylenglykolen mit Molgewichten von 1 300 bis 3 000 mit 20 bis 100 Gew.% Ethylenoxid in Gegenwart alkalischer Katalysatoren hergestellt worden ist, im Verhältnis von 0,5 bis 4 mol von a) mit 1 mol b) nach vorheriger Neutralisation, gegebenenfalls in Gegenwart indifferenter Lösungsmittel, bei 80 bis 150 °C kondensiert und das sich bildende Reaktionswasser entfernt, und

c) an das so erhaltene veretherte Phenol-Aldehyd-Kondensationsprodukt 10 bis 400 g Propylenoxid, bezogen auf 100 g Kondensationsprodukt, oder 10 bis 200 g Ethylenoxid und Propylenoxid im Verhältnis von 1 : 0,5 bis 14, bezogen auf 100 g Kondensationsprodukt, anlagert.

Die mit den Schritten a) und b) erhaltenen veretherten Phenol-Aldehyd-Kondensationsprodukte sind im Prinzip in den obengenannten Druckschriften ausführlich beschrieben, weshalb diesbezüglich auf diese Druckschriften verwiesen werden kann.

Die Vorprodukte gemäß a) werden in an sich bekannter Weise durch Addition von aliphatischen Aldehyden, vorzugsweise Formaldehyd und Acetaldehyd, insbesondere Formaldehyd, an Phenol in Gegenwart alkalischer Katalysatoren bei Temperaturen von 50 bis 80 °C, vorzugsweise 55 bis 70 °C, hergestellt. Wichtig dabei ist nur, daß diese Temperaturen nicht merklich überschritten werden, da sonst weiterführende Kondensationen zu resol- oder novolakartigen Produkten unter Verlust von Hydroxylgruppen stattfinden können. Das molare Verhältnis zwischen Phenol und Aldehyd beträgt 1 : 1 bis 1 : 3, vorzugsweise 1 : 1,8 bis 1 : 2,2.

Als alkalische Katalysatoren sind beispielsweise Natriumhydroxid, Natriumalkoholate wie Natriummethylat, Natriumcarbonat, Calciumhydroxid und die entsprechenden Kaliumverbindungen sowie tertiäre Amine wie Triethylamin geeignet, wobei Natriumhydroxid, Kaliumhydroxid und Natriumalkoholate bevorzugt sind. Die Menge an alkalischem Katalysator beträgt im allgemeinen 0,3 bis 5 Gew.-%, vorzugsweise 1 bis 3 Gew.-%, bezogen auf die Menge an eingesetztem Phenol. Der Formaldehyd wird zweckmäßigerweise in Form einer 35 gew.-%igen wäßrigen Formaldehyd-Lösung oder in Form von Paraformaldehyd eingesetzt.

Die Herstellung der Vorprodukte gemäß b) erfolgt bekanntermaßen durch Addition von Ethylenoxid an Polypropylenglykole in Gegenwart alkalischer Katalysatoren, vorzugsweise Kaliumhydroxid oder Natriumhydroxid. Man geht dabei von Polypropylenglykolen mit Molgewichten von 1 300 bis 3 000, vorzugsweise 1 500 bis 2 500, aus, und setzt diese mit 20 bis 100 Gew.-%, vorzugsweise 30 bis 80 Gew.-%,

2

Ethylenoxid, bezogen auf Polypropylenglykol, um. Die Menge an Katalysator beträgt im allgemeinen 0,1 bis 2 Gew.-%, vorzugsweise 0,2 bis 1 Gew.-%, bezogen auf Polypropylenglykol. Die Temperatur bei der Addition beträgt im allgemeinen 110 bis 160 °C, vorzugsweise 130 bis 150 °C.

Die anschließende Veretherung der alkalischen Reaktionsprodukte gemäß a) und b) wird nach vorangegangener Neutralisation mit geeigneten Säuren, gegebenenfalls in Gegenwart indifferenter Lösungsmittel, bei Reaktionstemperaturen von 80 bis 150 °C, vorzugsweise 100 bis 130 °C, bei gleichzeitiger Abführung des gebildeten Reaktionswassers, zum Beispiel durch Anlegen von Vakuum oder durch azeotrope Destillation, durchgeführt. Es gelangen 0,5 bis 4 mol von a), vorzugsweise 1 bis 3 mol von a), mit 1 mol von b) zur Reaktion. Für die Neutralisation können Mineralsäuren wie Salzsäure, Schwefelsäure und Phosphorsäure, oder auch organische Säuren wie Essigsäure, eingesetzt werden. Geeignete indifferente Lösungsmittel sind vorzugsweise Toluol und Xylol.

Das aus den Reaktionsschritten a) und b) erhaltene veretherte Phenol-Aldehyd-Kondensationsprodukt wird erfindungsgemäß mit 10 bis 400 g, vorzugsweise 20 bis 200 g Propylenoxid pro 100 g Kondensationsprodukt, propoxyliert oder mit 10 bis 200 g, vorzugsweise 20 bis 100 g Ethylenoxid und Propylenoxid pro 100 g Kondensationsprodukt, ethoxyliert und propoxyliert, wobei das Verhältnis (Gewichtsverhältnis) von Ethylenoxid zu Propylenoxid 1 : 0,5 bis 14, vorzugsweise 1 : 1 bis 8 beträgt.

Die erfindungsgemäße Oxalkylierung (Nachoxalkylierung) selbst wird im Prinzip nach der für die Oxalkylierung von beispielsweise Alkoholen, Glykolen oder Aminen bekannten Arbeitsweise durchgeführt. Zweckmäßigerweise wird so vorgegangen, daß das veretherte Phenol-Aldehyd-Kondensationsprodukt als solches oder gelöst in einem organischen Lösungsmittel, vorzugsweise Toluol oder Xylol, eingesetzt wird. Die Lösung ist im allgemeinen 10 bis 80 gew.-%ig, vorzugsweise 30 bis 60 gew.-%ig. Es wird in Gegenwart von alkalischen Katalysatoren wie Natriumhydroxid, Natriumcarbonat, Natriumalkoholaten wie Natriummethylat, Calciumhydroxid, den entsprechenden Kaliumverbindungen und tertiären Aminen wie Triethylamin, vorzugsweise Natriumhydroxid, Kaliumhydroxid und Natriumalkoholat, oxalkyliert, indem zum eingesetzten Kondensationsprodukt das Epoxid zudosiert wird, im allgemeinen in einer Zeit von 1 bis 8 Stunden. Die Menge an Katalysator beträgt im allgemeinen 0,2 bis 5 Gew.-%, vorzugsweise 0,5 bis 3 Gew.-%, bezogen auf die Menge an eingesetztem Kondensationsprodukt. Die Reaktionstemperatur beträgt im allgemeinen 90 bis 160 °C, vorzugsweise 110 bis 140 °C. Während der Oxalkylierung herrscht in der Regel ein Druck von 30 bis 500 kPa. Fällt der Druck unter etwa 30 kPa, so weist dies auf das Ende der Umsetzung, nämlich der Propylenoxid-Anlagerung oder Ethylenoxid- und Propylenoxid-Anlagerung hin.

Bei der Anlagerung von Ethylenoxid und Propylenoxid können beide Epoxide gleichzeitig oder nacheinander eingesetzt werden.

Von der erfindungsgemäßen Oxalkylierung ist die Propoxylierung bevorzugt.

Die erfindungsgemäßen Produkte stellen mehr oder weniger viskose, gelb bis braun gefärbte Flüssigkeiten dar. Beim erfindungsgemäßen Verfahren zum Trennen von Erdölemulsionen werden die neuen Produkte den in Bewegung befindlichen Emulsionen in einer Menge von 1 bis 100 g pro Tonne, vorzugsweise 5 bis 50 g pro Tonne, zugesetzt. Dabei können sie als solche oder in einem Lösungsmittel gelöst eingesetzt werden. Geeignete Lösungsmittel sind Wasser, Alkohole wie Methanol, Isopropanol und Isobutanol, aromatische Kohlenwasserstoffe wie Benzol, Toluol und Xylol, und handelsübliche Mischungen aus höheren Aromaten.

Die neuen Produkte sind sehr wirksame Spalter für Erdölemulsionen, vorzugsweise des Typs Wasser-in-Öl. Durch die erfindungsgemäße Nachoxalkylierung wird die Wirksamkeit von veretherten Phenol-Aldehyd-Kondensationsprodukten, wie sie beispielsweise in der deutschen Patentschrift 24 45 873 und in der entsprechenden US-Patentschrift 4 117 031 beschrieben sind, insbesondere bei hochsalinen Erdölen (das sind Erdöle mit einem relativ großen Kochsalzgehalt) in einem unerwartet hohen Ausmaß gesteigert. Die erfindungsgemäßen Spalter bewirken also eine sehr gute Wasserabscheidung und Salzaustragung. Bei ihrer Verwendung wird also ein besonders niedriger Restwasser- und Restsalzgehalt erreicht.

Die Erfindung wird nun an Beispielen noch näher erläutert.

Herstellung der erfindungsgemäßen Erdölspalter

Beispiel 1

Herstellung des Vorproduktes a): 94,1 g Phenol (1,00 mol) und 3,1 g 50 gew.-%ige Natriumhydroxidlösung (1,6 Gew.-% Natriumhydroxid, bezogen auf Phenol) werden in einem Rührkolben vorgelegt. Dann werden bei 55 bis 60 °C und Rühren 171 g (2,00 mol) Formaldehyd in Form einer 35 gew.-%igen wäßrigen Lösung zudosiert. Nun wird bei 70 °C solange gerührt, bis der Gehalt an freiem Formaldehyd unter 2 Gew.-% ist.

Es liegt eine rotbraune, niedrigviskose Flüssigkeit vor.

Herstellung des Vorproduktes b) und Umsetzung mit a): 400 g Polypropylenglykol mit einer mittleren Molmasse von 1 700 werden in Gegenwart von 2,5 g (0,6 Gew.-%, bezogen auf Polypropylenglykol) Kaliumhydroxid (85 gew.-%ig) 2 Stunden bei 110 °C und Wasserstrahlvakuum getrocknet. Anschließend werden bei 130 bis 140 °C 172 g Ethylenoxid (43 Gew.-%, bezogen auf Polypropylenglykol) zur Umsetzung gebracht.

Nach beendeter Oxethylierung liegt eine farblose, mittelviskose Flüssigkeit vor.

Zur Veretherung von a) mit b) werden in einem Rührkolben 80 g (0,30 mol) von a) mit 486 g (0,20 mol) des Vorproduktes b) gemischt und mit Dodecylbenzolsulfonsäure neutralisiert (das Molverhältnis a) zu b) ist 1,5 : 1). Bis zu einer Temperatur von 80 bis 85 °C wird das in der Mischung vorhandene freie Wasser in Vakuum bei etwa 2 000 mPa abdestilliert. Anschließend wird durch Erhöhen der Reaktionstemperatur auf 140 °C die Veretherung durchgeführt und gleichzeitig das entstehende Reaktionswasser im Vakuum abgezogen.

Es liegt eine rotbraune, viskose Flüssigkeit vor.

Oxpropylierung :

Zu 325 g des erhaltenen Phenol-Aldehyd-Kondensationsproduktes werden in einem Druckrührgefäß 1,6 g (0,5 Gew.-%, bezogen auf Kondensationsprodukt) Kaliumhydroxid (85 gew.-%ig) gegeben. Es wird unter Rühren 2 Stunden lang bei 110 bis 120 °C und einem Vakuum von etwa 2 000 mPa gehalten und dadurch getrocknet. Anschließend werden bei 120 bis 130 °C und einem Druck von 50 bis 500 kPa 107 g Propylenoxid in einem Zeitraum von 3 Stunden zudosiert (das entspricht 33 g Propylenoxid pro 100 g Kondensationsprodukt).

Nach Abreaktion des Propylenoxids liegt das Endprodukt als dunkle, mittelviskose Flüssigkeit vor.

Beispiel 2

Vorprodukt a) von Beispiel 1.

Herstellung des Vorproduktes b) und Umsetzung mit a) : 500 g Polypropylenglykol mit einer mittleren Molmasse von 2 000 werden in Gegenwart von 1,6 g (0,3 Gew.-%, bezogen auf Polypropylenglykol) Kaliumhydroxid (85 gew.-%ig) unter Wasserstrahlvakuum bei 100 °C 2 Stunden lang getrocknet. Anschließend werden bei 130 bis 150 °C 190 g Ethylenoxid (38 Gew.-%, bezogen auf Polypropylenglykol) zudosiert. Nach beendeter Oxethylierung liegt eine schwach gelb gefärbte, mittelviskose Flüssigkeit vor.

Zur Veretherung von a) mit b) werden in einem Rührkolben 107 g (0,40 mol) des Vorproduktes a) mit 560 g (0,20 mol) des Vorproduktes b) gemischt und mit Phosphorsäure neutralisiert (das Molverhältnis a) zu b) entspricht 2 : 1). Das Gemisch wird wie in Beispiel 1 aufgeheizt und die Veretherung unter Wasserentfernung durchgeführt.

Das Produkt wird mit 600 g Xylol verdünnt und liegt dann als 50 gew.-%ige xylolische Lösung vor.

Oxalkylierung :

Zu 520 g der 50 gew.-%igen xylolischen Lösung des Phenol-Aldehyd-Kondensationsproduktes werden in einem Druckrührgefäß 2,5 g (1,0 Gew.-%, bezogen auf Kondensationsprodukt) Kaliumhydroxidpulver (85 gew.-%ig) gegeben ; es wird 2 Stunden lang bei einer Rückflußtemperatur von etwa 140 °C gehalten und das vorhandene Wasser mit dem Xylol als Schleppmittel destillativ entfernt. Anschließend wird bei 125 bis 145 °C und einem Druck von 50 bis 500 kPa ein Gemisch aus 130 g Ethylenoxid und 130 g Propylenoxid in 4 Stunden zudosiert (das entspricht 100 g Epoxid, im Gewichtsverhältnis Ethylenoxid zu Propylenoxid wie 1 : 1, pro 100 g lösungsmittelfreies Kondensationsprodukt).

Das Endprodukt ist eine 67 gew.-%ige, dunkle Lösung des Oxalkylats in Xylol.

Beispiele 3 bis 6

Diese Beispiele werden analog Beispiel 1 durchgeführt. Die gegenüber dem Beispiel 1 vorgenommenen Variationen sind nachstehend zusammengefaßt. Aus Übersichtsgründen enthält die Zusammenfassung auch die den Variationen der Beispiele 3 bis 6 entsprechenden Bedingungen bei den Beispielen 1 und 2.

(Siehe Tabelle Seite 5 f.)

Verwendung der erfindungsgemäßen Erdölspalter

Die folgenden Beispiele zeigen die überraschend hohe Wirkung der neuen Spalter bei einem Erdöl mit einem relativ großen Kochsalzgehalt unter verschiedenen Demulgierbedingungen.

Die in den Beispielen angegebenen Prozente sind Gewichtsprozente.

Beispiel 7

4

## Zusammenfassung der Beispiele 3 bis 6

| Bei-spiel | Vorprodukt a) Molverhältnis Aldehyd zu Phenol | Vorprodukt b) | | Kondensationsprodukt aus a) und b) Molverhältnis a) zu b) | Oxalkylierung Gramm Epoxid pro 100 g Kondensationsprodukt |
|---|---|---|---|---|---|
| | | Polypropylenglykol-Molmasse | Gew.-% Ethylenoxid, bezogen auf Polypropylenglykol | | |
| 1 | 2 : 1 | 1700 | 43 | 1,5 : 1 | 33 g Propylenoxid |
| 2 | 2 : 1 | 2000 | 38 | 2 : 1 | 50 g Ethylenoxid und 50 g Propylenoxid |
| 3 | 2 : 1 | 2000 | 60 | 1,5 : 1 | 194 g Propylenoxid |
| 4 | 1,5 : 1 | 1500 | 60 | 4 : 1 | 400 g Propylenoxid |
| 5 | 2,5 : 1 | 2500 | 25 | 1 : 1 | 130 g Propylenoxid |
| 6 | 2,2 : 1 | 3000 | 100 | 3 : 1 | 20 g Propylenoxid |

**0 097 897**

Rohöl aus Norddeutschland
Natriumchlorid-Gehalt :                                          13,2 %
Wassergehalt :                                                    42 %
Demulgiertemperatur :                                           50 °C
Dosiermenge :                                      30 ppm Wirksubstanz

| Spaltertyp | Wasserseparation in % nach | | | | Restgehalt in % an Salz in der Ölphase |
|---|---|---|---|---|---|
| | 40' | 60' | 90' | 240' | |
| Produkt von Beispiel 1 | 0 | 30 | 92 | 96 | 0,24 |
| Produkt von Beispiel 3 | 5 | 92 | 94 | 98 | 0,27 |
| Nichtpropoxyliertes Kondensationsprodukt von Beispiel 1 | 5 | 13 | 20 | 55 | 5,94 |
| Nichtpropoxyliertes Kondensationsprodukt von Beispiel 3 | 11 | 24 | 33 | 74 | 3,14 |
| Blindwert | 0 | 0 | 0 | 0 | 13,2 |

Beispiel 8

Rohöl aus Norddeutschland
Natriumchlorid-Gehalt :                                           3,8 %
Wassergehalt :                                                    48 %
Demulgiertemperatur :                                           30 °C
Dosiermenge :                                     100 ppm Wirksubstanz

| Spaltertyp | Wasserseparation in % nach | | | | | | Wassergehalt in % in der Ölphase (nach 6 h) |
|---|---|---|---|---|---|---|---|
| | 0,5 h | 1 h | 2 h | 4 h | 6 h | 24 h | |
| Produkt von Beispiel 2 | 0 | 0 | 2 | 5 | 15 | 80 | 2,9 |
| Nichtoxalkyliertes Kondensationsprodukt von Beispiel 2 | 4 | 8 | 12 | 38 | 50 | 64 | 18,7 |
| Produkt von Beispiel 3 | 42 | 68 | 94 | 96 | 98 | 100 | 0,04 |
| Produkt von Beispiel 4 | 0 | 4 | 8 | 24 | 90 | 96 | 0,23 |
| Nichtoxalkyliertes Kondensationsprodukt von Beispiel 4 | 0 | 4 | 12 | 38 | 50 | 64 | 19,4 |
| Produkt von Beispiel 5 | 2 | 6 | 48 | 98 | 100 | 100 | 0,5 |
| Nichtoxalkyliertes Kondensationsprodukt von Beispiel 5 | 1 | 4 | 12 | 42 | 76 | 84 | 10 |
| Blindwert | 0 | 0 | 0 | 2 | 4 | 6 | 36,8 |

**0 097 897**

**Patentansprüche** (für die Vertragsstaaten : BE, CH, DE, FR, GB, IT, LI, NL)

1. Modifizierte veretherte Phenol-Aldehyd-Kondensationsprodukte, dadurch gekennzeichnet, daß sie hergestellt worden sind, indem man

a) ein Anlagerungsprodukt, das durch Umsetzung von aliphatischen Aldehyden mit Phenol im molaren Verhältnis von 1 : 1 bis 3 : 1 bei Temperaturen von 50 bis 80 °C in Gegenwart eines alkalischen Katalysators erhalten worden ist, mit

b) einem Blockpolymerisat, das durch Umsetzung von Polypropylenglykolen mit Molgewichten von 1 300 bis 3 000 mit 20 bis 100 Gew.-% Ethylenoxid in Gegenwart alkalischer Katalysatoren hergestellt worden ist, im Verhältnis von 0,5 bis 4 mol von a) mit 1 mol b) nach vorheriger Neutralisation, gegebenenfalls in Gegenwart indifferenter Lösungsmittel, bei 80 bis 150 °C kondensiert und das sich bildende Reaktionswasser entfernt, und

c) an das so erhaltene veretherte Phenol-Aldehyd-Kondensationsprodukt 10 bis 400 g Propylenoxid, bezogen auf 100 g Kondensationsprodukt, oder 10 bis 200 g Ethylenoxid und Propylenoxid im Verhältnis von 1 : 0,5 bis 14, bezogen auf 100 g Kondensationsprodukt, anlagert.

2. Produkt nach Anspruch 1, dadurch gekennzeichnet, daß für die Herstellung von a) als aliphatischer Aldehyd Formaldehyd eingesetzt wird.

3. Produkte nach Anspruch 1, dadurch gekennzeichnet, daß bei der Herstellung von a) das molare Verhältnis von Aldehyd zu Phenol 1,8 : 1 bis 2,2 : 1 ist.

4. Produkte nach Anspruch 1, dadurch gekennzeichnet, daß das Blockpolymerisat b) hergestellt wird aus einem Polypropylenglykol mit einem Molekulargewicht von 1 500 bis 2 500 und 30 bis 80 Gew.-% Ethylenoxid.

5. Produkte nach Anspruch 1, dadurch gekennzeichnet, daß a) mit b) im Verhältnis von 1 bis 3 : 1 kondensiert wird.

6. Produkte nach einem der Ansprüche 1 bis 5, dadurch gekennzeichnet, daß man an das aus a) und b) erhaltene veretherte Phenol-Aldehyd-Kondensationsprodukt 20 bis 200 g Propylenoxid anlagert.

7. Verfahren zum Trennen von Erdöl-Emulsionen, dadurch gekennzeichnet, daß den Emulsionen Spalter nach einem der Ansprüche 1 bis 6 in einer Menge von 1 bis 100 g pro Tonne zugesetzt werden.

**Patentansprüche** (für den Vertragsstaat AT)

1. Verfahren zur Herstellung von modifizierten veretherten Phenol-Aldehyd-Kondensationsprodukten, dadurch gekennzeichnet, daß man

a) ein Anlagerungsprodukt, das durch Umsetzung von aliphatischen Aldehyden mit Phenol im molaren Verhältnis von 1 : 1 bis 3 : 1 bei Temperaturen von 50 bis 80 °C in Gegenwart eines alkalischen Katalysators erhalten worden ist, mit

b) einem Blockpolymerisat, das durch Umsetzung von Polypropylenglykolen mit Molgewichten von 1 300 bis 3 000 mit 20 bis 100 Gew.-% Ethylenoxid in Gegenwart alkalischer Katalysatoren hergestellt worden ist, im Verhältnis von 0,5 bis 4 mol von a) mit 1 mol b) nach vorheriger Neutralisation, gegebenenfalls in Gegenwart indifferenter Lösungsmittel, bei 80 bis 150 °C kondensiert und das sich bildende Reaktionswasser entfernt, und

c) an das so erhaltene veretherte Phenol-Aldehyd-Kondensationsprodukt 10 bis 400 g Propylenoxid, bezogen auf 100 g Kondensationsprodukt, oder 10 bis 200 g Ethylenoxid und Propylenoxid im Verhältnis von 1 : 0,5 bis 14, bezogen auf 100 g Kondensationsprodukt, anlagert.

2. Verfahren nach Anspruch 1, dadurch gekennzeichnet, daß für die Herstellung von a) als aliphatischer Aldehyd Formaldehyd eingesetzt wird.

3. Verfahren nach Anspruch 1, dadurch gekennzeichnet, daß bei der Herstellung von a) das molare Verhältnis von Aldehyd zu Phenol 1,8 : 1 bis 2,2 : 1 ist.

4. Verfahren nach Anspruch 1, dadurch gekennzeichnet, daß das Blockpolymerisat b) hergestellt wird aus einem Polypropylenglykol mit einem Molekulargewicht von 1 500 bis 2 500 und 30 bis 80 Gew.-% Ethylenoxid.

5. Verfahren nach Anspruch 1, dadurch gekennzeichnet, daß a) mit b) im Verhältnis von 1 bis 3 : 1 kondensiert wird.

6. Verfahren nach einem der Ansprüche 1 bis 5, dadurch gekennzeichnet, daß man an das aus a) und b) erhaltene veretherte Phenol-Aldehyd-Kondensationsprodukt 20 bis 200 g Propylenoxid anlagert.

7. Verfahren zum Trennen von Erdöl-Emulsionen, dadurch gekennzeichnet, daß den Emulsionen Verfahrensprodukte nach einem der Ansprüche 1 bis 6 in einer Menge von 1 bis 100 g pro Tonne zugesetzt werden.

**Claims** (for the Contracting States : BE, CH, DE, FR, GB, IT, LI, NL)

1. A modified etherified phenol/aldehyde condensation product which has been prepared by subjecting

7

a) an addition reaction product which has been obtained by reacting aliphatic aldehydes with phenol in a molar ratio of 1 : 1 to 3 : 1 at temperatures of 50 to 80 °C in the presence of an alkaline catalyst, to a condensation reaction at 80 to 150 °C, after prior neutralisation and, if appropriate, in the presence of inert solvents, with

b) a block polymer which has been prepared by reacting polypropylene glycols having molecular weights of 1 300 to 3 000 with 20 to 100 % by weight of ethylene oxide in the presence of alkaline catalysts, in a ratio of 0.5 to 4 moles of a) to 1 mole of b), and removing the water of the reaction which is formed, and

c) adding on 10 to 400 g of propylene oxide, relative to 100 g of condensation product, or 10 to 200 g of ethylene oxide and propylene oxide in a ratio of 1 : 0.5 to 14, relative to 100 g of condensation product, in an addition reaction, to the etherified phenol/aldehyde condensation product thus obtained.

2. A product as claimed in claim 1, wherein formaldehyde is employed as the aliphatic aldehyde for the preparation of a).

3. A product as claimed in claim 1, wherein the molar ratio of aldehyde to phenol in the preparation of a) is 1.8 : 1 to 2.2 : 1.

4. A product as claimed in claim 1, wherein the block polymer b) is prepared from a polypropylene glycol having a molecular weight of 1 500 to 2 500 and 30 to 80 % by weight of ethylene oxide.

5. A product as claimed in claim 1, wherein a) is subjected to a condensation reaction with b) in a ratio of 1 to 3 : 1.

6. A product according to claim 1, wherein 20 to 200 g of propylene oxide are added on, by means of an addition reaction, to the etherified phenol/aldehyde condensation product obtained from a) and b).

7. A process for separating petroleum emulsions, which comprises adding to the emulsions a breaker according to claim 1, in an amount of 1 to 100 g per tonne.

**Claims** (for the Contracting State AT)

1. A process for the preparation of modified etherified phenol/aldehyde condensation products wherein

a) an addition reaction product which has been obtained by reacting aliphatic aldehydes with phenol in a molar ratio of 1 : 1 to 3 : 1 at temperatures of 50 to 80 °C in the presence of an alkaline catalyst, is subjected to a condensation reaction at 80 to 150 °C, after prior neutralisation and, if appropriate, in the presence of inert solvents, with

b) a block polymer which has been prepared by reacting polypropylene glycols having molecular weights of 1 300 to 3 000 with 20 to 100 % by weight of ethylene oxide in the presence of alkaline catalysts, in a ratio of 0.5 to 4 moles of a) to 1 mole of b), and removing the water of the reaction which is formed, and

c) adding on 10 to 400 g of propylene oxide, relative to 100 g of condensation product, or 10 to 200 g of ethylene oxide and propylene oxide in a ratio of 1 : 0.5 to 14, relative to 100 g of condensation product, in an addition reaction, to the etherified phenol/aldehyde condensation product thus obtained.

2. A process as claimed in claim 1, wherein formaldehyde is employed as the aliphatic aldehyde for the preparation of a).

3. A process as claimed in claim 1, wherein the molar ratio of aldehyde to phenol in the preparation of a) is 1.8 : 1 to 2.2 : 1.

4. A process as claimed in claim 1, wherein the block polymer b) is prepared from a polypropylene glycol having a molecular weight of 1 500 to 2 500 and 30 to 80 % by weight of ethylene oxide.

5. A process as claimed in claim 1, wherein a) is subjected to a condensation reaction with b) in a ratio of 1 to 3 : 1.

6. A process according to anyone of claims, 1-5, wherein 20 to 200 g of propylene oxide are added on, by means of an addition reaction, to the etherified phenol/aldehyde condensation product obtained from a) and b).

7. A process for separating petroleum emulsions, which comprises adding to the emulsions the products obtained by the processes claimed in anyone of claims 1 to 6 in an amount of 1 to 100 g per ton.

**Revendications** (pour les Etats contractants : BE, CH, DE, FR, GB, IT, LI, NL)

1. Produits de condensation phénol/aldéhyde éthérifiés modifiés, caractérisés en ce qu'on les prépare en condensant

a) un produit d'addition qui a été obtenu par la réaction d'aldéhydes aliphatiques sur du phénol selon un rapport molaire de 1 : 1 à 3 : 1, à des températures de 50 à 80 °C, en présence d'un catalyseur alcalin,

b) avec un polymère séquencé qui a été obtenu par la réaction de polypropylèneglycols ayant des masses moléculaires de 1 300 à 3 000 sur 20 à 100 % en poids d'oxyde d'éthylène en présence de catalyseurs alcalins, selon un rapport de 0,5 à 4 moles de a) par mole de b), après neutralisation préalable, éventuellement en présence de solvants inertes, à 80 à 150 °C, et en éliminant l'eau de réaction qui se forme, et

c) en fixant sur le produit de condensation phénol/aldéhyde éthérifié ainsi obtenu 10 à 400 g d'oxyde de propylène, sur la base de 100 g de produit de condensation, ou 10 g à 200 g d'oxyde d'éthylène et d'oxyde de propylène selon un rapport 1 : 0,5 à 14, sur la base de 100 g du produit de condensation.

2. Produits selon la revendication 1, caractérisés en ce qu'on utilise du formaldéhyde en tant qu'aldéhyde aliphatique pour la préparation de a).

3. Produits selon la revendication 1, caractérisés en ce que, lors de la préparation de a), le rapport molaire entre l'aldéhyde et le phénol est de 1,8 : 1 à 2,2 : 1.

4. Produits selon la revendication 1, caractérisés en ce qu'on prépare le copolymère séquencé b) à partir d'un polypropylèneglycol ayant une masse moléculaire de 1 500 à 2 500, et de 30 à 80 % en poids d'oxyde d'éthylène.

5. Produits selon la revendication 1, caractérisés en ce que la condensation de a) avec b) s'effectue selon le rapport de 1 à 3 : 1.

6. Produits selon l'une des revendications 1 à 5, caractérisés en ce qu'on fixe 20 à 200 g d'oxyde de propylène sur le produit de condensation phénol/aldéhyde éthérifié obtenu à partir de a) et b).

7. Procédé pour séparer des émulsions pétrolières, caractérisé en ce qu'on a ajouté aux émulsions des agents désémulsionnants selon l'une des revendications 1 à 6, en une concentration de 1 à 100 g par tonne.

**Revendications** (pour l'Etat contractant AT)

1. Procédé pour la préparation de produits de condensation phénol/aldéhyde éthérifiés modifiés, caractérisé en ce qu'on condense

a) un produit d'addition qui a été obtenu par la réaction d'aldéhydes aliphatiques sur du phénol selon un rapport molaire de 1 : 1 à 3 : 1 à des températures de 50 à 80 °C et en présence d'un catalyseur alcalin,

b) avec un polymère séquencé qui a été obtenu par la réaction de polypropylèneglycols ayant des masses moléculaires de 1 300 à 3 000, sur 20 à 100 % en poids d'oxyde d'éthylène en présence de catalyseurs alcalins, selon un rapport de 0,5 à 4 moles de a) par mole de b), après neutralisation préalable, éventuellement en présence de solvants inertes, à 80 à 150 °C, et qu'on élimine l'eau de réaction qui se forme, et

c) qu'on fixe sur le produit de condensation phénol/aldéhyde éthérifié ainsi obtenu 10 à 400 g d'oxyde de propylène sur la base de 100 g du produit de condensation, ou 10 à 200 g d'oxyde d'éthylène et d'oxyde de propylène, selon un rapport de 1 : 0,5 à 14, sur la base de 100 g du produit de condensation.

2. Procédé selon la revendication 1, caractérisé en ce qu'on utilise du formaldéhyde en tant qu'aldéhyde aliphatique pour la préparation de a).

3. Procédé selon la revendication 1, caractérisé en ce que, lors de la préparation de a), le rapport molaire entre l'aldéhyde et le phénol est de 1,8 : 1 à 2,2 : 1.

4. Procédé selon la revendication 1, caractérisé en ce qu'on prépare le copolymère séquencé b) à partir d'un polypropylèneglycol ayant une masse moléculaire de 1 500 à 2 500, et de 30 à 80 % en poids d'oxyde d'éthylène.

5. Procédé selon la revendication 1, caractérisé en ce qu'on procède à la condensation de a) et de b) selon un rapport de 1 à 3 : 1.

6. Procédé selon l'une des revendications 1 à 5, caractérisé en ce qu'on fixe 20 à 200 g d'oxyde de propylène sur le produit de condensation phénol/aldéhyde éthérifié obtenu à partir de a) et b).

7. Procédé pour séparer des émulsions pétrolières, caractérisé en ce qu'on ajoute aux émulsions des produits obtenus par les procédés selon l'une des revendications 1 à 6, selon une concentration de 1 à 100 g par tonne.